# EUROPEAN PATENT SPECIFICATION

(11) **EP 4 070 992 B1**
(45) Date of publication and mention of the grant of the patent: **13.08.2025**
(21) Application number: 22165238.1
(22) Date of filing: 29.03.2022
(51) Int. Cl.: B60P 7/15, B61D 45/00

(54) **LOW NOISE DECKING SYSTEM**
GERÄUSCHBEGRENZUNGSSYSTEM FÜR EIN DECKSYSTEM
SYSTÈME DE TABLIER À FAIBLE BRUIT

(30) Priority: 08.04.2021 GB 202105035
(43) Date of publication of application: 12.10.2022
(73) Proprietor: Loadlok Manufacturing Limited, Hirwaun CF44 9UP (GB)
(72) Inventor: STREET, Henry, Hirwaun CF44 9UP (GB); JONES, Richard, Hirwaun CF44 9UP (GB)
(74) Representative: Abel & Imray LLP

(56) References cited:
- EP-A1- 3 153 350
- EP-B1- 1 389 562
- EP-B1- 2 703 216
- US-A1- 2010 001 126
- US-B1- 8 172 494

## Description

### Field of the Invention

The present invention concerns an apparatus for coupling a decking beam to a track along which the apparatus can move. More specifically, the invention relates to a low-noise coupling apparatus. The invention also concerns a low-noise beam assembly. The invention also concerns a trigger bar for accessing a beam assembly. More specifically, the invention concerns a low-noise trigger bar.

### Background of the Invention

Many industries require transportation of goods and other materials from one location to another. Such transportation may be by road, rail, sea or air. For example, in the case of road transportation, goods (or other materials) may be transported by a vehicle such as a lorry or van that has a storage space (referred to hereinafter as a container) mounted to or supported on the chassis of the vehicle. Transportation of the goods constitutes a cost that must be borne by the entity transporting the goods. The cost includes, among others, the cost of paying the driver and the cost of fuel. To minimise these costs (among others) it is preferable to maximise use of the space available within containers.

One approach to maximising use of space is to provide adjustable horizontal beams within the container. The height of the beams with respect to the floor or deck of the container can be adjusted according to the size of the goods being transported to divide the vertical internal dimension of the container into two or more spaces. This enables goods to be stacked without loading goods directly on top of other goods. Use of such beams increases the potential for maximising use of the space but also requires the driver to be able to load and unload the goods at height.

The beams may comprise a box-section beam with two opposing box-shaped ends, each end coupled to a track mounted within the container.

The beams must be strong enough to support heavy goods; this may be, for example, up to 1000 kg. Thus, the beams and the track are typically constructed from strong material such as metal.

In populated areas such as city centres, there may be noise limitations for deliveries made between certain times, such as 7:00pm and 7:00am. For example, deliveries made between 7.00pm and 11.00pm must not exceed 65dB, and deliveries between 11.00pm and 07.00am must not exceed 60dB.

In adjusting the height of the beams, and loading and/or unloading the cargo within the container, the noise created from the frictional contact and/or impact noise between the metal material of the decking beam and the track often exceeds the noise limitation in these populated areas.

EP 3 153 350 A1 discloses a loading beam assembly for mounting on a track within a cargo vessel. US 8 172 494 B1 discloses a beam assembly for mounting on a track within a cargo unit. US 2010/001126 A1 discloses a mounting rail for aircrafts. EP 1 389 562 B1 discloses a beam for securing cargo in a vehicle or the like, comprising a pivotable head portion and a latch bolt. EP 2 703 216 B1 discloses double-decker rails arranged vertically along the inner walls of a container. The present invention seeks to avoid or mitigate the above-mentioned problems by providing a low noise decking system.

### Summary of the Invention

According to a first aspect, the invention provides an apparatus for coupling a beam to a track, comprising an arm assembly having a first end arranged to interface with the beam, and a second end opposite the first end, a head assembly coupled to the second end of the arm and arranged to engage with the track to inhibit movement of the head assembly along the track, wherein the head assembly comprises a receiving portion and a plastics material received within the receiving portion, characterised in that the receiving portion is a groove and the plastics material is a rod comprising a circular cross-section, and such that the plastics material provides a contact surface between the head assembly and the track when the head assembly is engaged with the track.

The coupling apparatus enables cargo to be suspended at height on decking beams coupled to a track within the internal walls of a container. When the cargo is required to be loaded and/or unloaded, the plastics material in contact with the track may reduce the noise created through frictional forces.

The head assembly may be rotatably coupled to the arm assembly. In some embodiments, the head assembly may be connected to the arm assembly by a pivot pin such that the head assembly is rotatable about an axis of rotation which extends through the pivot pin. The pivot pin may be secured with a locking nut.

The head assembly may be made of metal material, such as aluminium, steel or stainless steel. The track may comprise metal material such as aluminium, steel, or stainless steel. The plastics material may reduce metal on metal contact between the head assembly and the track to reduce the noise created when the metal head assembly is coupled to the metal track.

Materials such as plastics materials may have a lower coefficient of friction than metal material when it is in contact with other metal material. The plastics material may separate the head assembly and the track, reducing the noise created through frictional contact, and in particular noise created by metal on metal contact. The noise created through friction between the plastics material and the track may be lower than the noise created by metal in contact with metal, and may prevent noise exceeding the threshold at locations that have noise limitations.

The plastics material may comprise Acetal. The plastics material may comprise other plastic material such as polyvinyl chloride (PVC), high density polyethylene (HDPE), polypropylene (PP), or other plastics material known to the skilled person in the art. Over time, the plastics material may wear down through continued frictional contact with the track. Acetal plastic is advantageous as it is widely available and inexpensive to replace.

The receiving portion is a groove. The receiving portion may have a rounded shape configured to receive a cylindrical plastics material. In other embodiments, the receiving portion may be an elongated channel.

The plastics material is a rod. The plastics material may be a hollow rod. In some embodiments, the plastics material may be spherical, and the receiving portion may be correspondingly shaped.

The plastics material is a rod with a circular cross-section. A rod with a circular cross-section may reduce the surface contact with the track whilst retaining the separation between the head assembly and the track. The circular cross-section may potentially make movement easier through reduced frictional contact.

The plastics material may be secured in the receiving portion of the head assembly by adhesive, and/or mechanical fasteners such as clips or screws.

The head assembly may comprise two receiving portions, each receiving portion configured to receive a plastics material. The two receiving portions may be located to opposite sides of the head assembly. The plastics material in contact with the track may provide additional distance between the head assembly and the track. The plastics material may separate the head assembly from the track and reduce noise further. Advantageously, having two receiving portions and corresponding plastics material may reduce the frictional force on each independent plastics material, which may slow down the wearing down of the independent plastics material and reduce the number of times the plastics material is replaced though excess wear.

The head assembly may comprise a trigger mechanism. The trigger mechanism may enable the coupling assembly to engage with a receiver on the track, inhibiting any movement.

The trigger mechanism may be housed within the head assembly. The head assembly may hold the trigger mechanism such that a part of the trigger mechanism engages with a receiver on the track. In this configuration, the head assembly protects the trigger mechanism from external environmental effects such as weathering.

The trigger mechanism may comprise an actuator for operating the trigger mechanism. The trigger mechanism may comprise a first protrusion for engaging with a receiver on the track. The trigger mechanism may comprise a pivot pin for attaching the trigger mechanism to the head assembly and a biasing member, wherein the trigger mechanism is rotatable about the pivot pin and, in use, the biasing member urges against the trigger mechanism to engage the protrusion with the track.

The actuator may be a second protrusion extending away from the head assembly, the second protrusion comprising an aperture for receiving a receiving member. The receiving member may be a rod, bar or a hook. The receiving member may be used to manipulate the coupling apparatus when the beam and/or cargo is at a height.

The biasing member may be a tensioned wire. The biasing member may be a spring, for example a leaf spring or a coiled spring. The spring may be a double torsion spring, which advantageously applies a balanced force to the trigger.

The trigger mechanism may engage and/or disengage with the track. The first protrusion may engage with the track, such that the coupling apparatus is held stationary i.e. inhibited from moving. The trigger mechanism may be actuated to disengage the first protrusion with the track, such that the coupling apparatus is enabled to move along the track.

The trigger mechanism enables beams to be held stationary at height to securely store the cargo, particularly when transporting. This is advantageous when loading or unloading heavy cargo into the container to be supported by the beam.

The plastics material may remain in contact with the track when the head assembly moves along the track. When the trigger mechanism is actuated to disengage the first protrusion away from the track, the coupling apparatus may move along the track. The plastics material may remain in contact with the track such that the plastics material slides along the track and remains in contact with the track. Advantageously, the low friction plastics material enables the coupling apparatus to move (e.g. slide) along the track with ease. The plastics material may reduce the noise created when the coupling apparatus is moved along the track. The plastics material may reduce the surface area of the head assembly that contacts the track.

A portion of the plastics material may be exposed outwardly from the receiving portion and contact the surface of the track when the coupling apparatus is stationary and/or moving along the track. The portion of the plastics material exposed may be between 5% and 75% of the plastics material. A portion of the plastics material received by the receiving portion may be between 95% and 25% of the plastic material.

According to a second aspect of the invention there is provided a low-noise decking beam assembly comprising a track for mounting on a wall of a container, a beam having a first end and a second end, and a coupling apparatus for coupling a beam to a track in accordance with the first aspect of the invention, wherein the coupling apparatus is arranged to interface the first and/or second end of the beam and engage with the track.

The first and/or second end of the beam may each be interfaced with a coupling apparatus according to the first aspect of the invention.

According to an example, there may be a head assembly for coupling a beam to a track, the head assembly comprising a receiving portion and a plastics material received within the receiving portion, such that the plastics material provides a contact surface between the head assembly and the track when the head assembly is engaged with the track.

According to another example, there may be a track for a storage container comprising receiving apertures for receiving a coupling apparatus, and a plastics material arranged on a surface of the track, wherein the plastics material is a rod having a circular cross-section, and such that the plastics material provides a contact surface between the coupling apparatus and the track when the coupling apparatus is engaged with the track

The track may be mounted on an internal wall of a container, and arranged to receive a coupling apparatus for coupling with a beam. The track mostly comprises of metal material such as aluminium or stainless steel, for example. This provides the track with strength and durability. The coupling apparatus may also comprise metal material such as aluminium or stainless steel, for example. The plastics material on the surface of the track may separate the track and the coupling apparatus. The noise created through friction between the plastics material and the coupling apparatus or impacts between the plastics material and the coupling apparatus may be lower than the noise created by metal in contact with metal, and may prevent noise exceeding the threshold at locations that have noise limitations.

The plastics material may be a flat contact surface. The plastics material may be a rod or bar aligned along the longitudinal axis of the track.

The track of the present embodiment may be configured to couple with any coupling apparatus as would reasonably be known to the skilled person. The track may be configured to receive a coupling apparatus according to the first aspect of the invention.

According to another aspect of the invention, there is provided a trigger bar for manipulating a trigger mechanism of a low-noise decking beam assembly according to the second aspect of the present invention, the trigger bar comprising an elongated arm comprising a first end and a second end opposite the first end, and an actuating assembly connected to the second end of the arm. The actuating assembly comprises a main body having protrusion arranged to engage with the trigger mechanism, the main body further comprising a plastics material contact plate, the contact plate comprising a first contact surface at a first orientation, and a second contact surface at a second orientation, the first orientation being different to the second orientation.

The trigger bar may be held at the first end of the arm, and the second end used for manipulating a beam assembly at height within a container. A user of the trigger bar may bring the main body of the trigger bar into contact with the trigger mechanism of a head assembly. The first contact surface of the main body may contact the track. The user may then move the second end of the elongate bar towards the side of the container, such that the main body reacts against the track, and the second contact surface of the main body comes into contact with the track. A pivoting movement moves the protrusion extending from the main body away from the side of the container, such that the trigger mechanism is actuated, and the head assembly becomes free to move along the track. The user may then push or pull the trigger bar to facilitate the movement of the head assembly along the track.

The plastics material contact plate may comprise Acetal. The plastics material contact plate may comprise other plastic material such as polyvinyl chloride (PVC), high density polyethylene (HDPE), polypropylene (PP), etc. The contact plate may be a sleeve configured to surround the main body of the trigger bar.

The main body may be made of metal material, such as stainless steel or aluminium. The track may comprise metal material such as steel or aluminium. The plastics material contact plate may reduce the impact between the main body and the track to reduce the noise created when bringing the main body into contact with the track, and/or through frictional contact when the trigger bar moves along the track.

The protrusion on the main body may comprise a hook portion. In an example, the hook portion may be coupled with a receiver or aperture on the actuator.

The trigger bar may be used to assist the movement of the coupling apparatus along the track. When the trigger mechanism is actuated, the coupling apparatus can move along the track.

The first contact surface of the plastics material contact plate may be configured to contact and move along a track in the first orientation. The second contact surface of the plastics material contact plate may be configured to contact and move along the track in the second orientation.

The first contact surface and second contact surface may meet at a joint or turning point, wherein the trigger bar can move from a first orientation where the first contact surface is in contact with the track, to a second orientation where the second contact surface is in contact with the track. This enables a smooth transition from the first configuration to a second configuration.

The plastics material contact plate may comprise a double-footed profile that guides the plastics material contact plate to move along the track, and allows the user to align the trigger bar accurately with the coupling apparatus. The double-footed profile may improve stability of the trigger bar as the trigger bar is moved along the track.

According to an example, there may be a method of manipulating a trigger mechanism of a coupling apparatus of a decking beam assembly engaged with a track, the method comprising the steps of: a) bringing the first contact surface of a trigger bar according to the fifth aspect of the invention into contact with a track; b) bringing the protrusion into contact with an actuator of the trigger mechanism; and c) applying a force to the first end of the elongated arm such that the second contact surface may come into contact with the track, thus actuating the trigger mechanism to allow movement of the head assembly.

The method may comprise the step of moving the coupling apparatus along the track using the trigger bar.

The method may comprise the step of moving the trigger bar such that the first contact surface comes into contact with the track, thus releasing the force against the actuator of the trigger mechanism and inhibiting movement of the coupling apparatus

It will of course be appreciated that features described in relation to one aspect of the present invention may be incorporated into other aspects of the present invention.

### Description of the Drawings

Embodiments of the present invention will now be described by way of example only with reference to the accompanying schematic drawings of which:
Figure 1a shows an exploded view of the coupling apparatus;
Figure 1b shows a perspective view of the coupling apparatus assembled together;
Figure 2a shows a top view of the coupling apparatus;
Figure 2b shows a side view of the coupling apparatus as assembled;
Figure 3a shows a top view of the coupling apparatus coupled with a track;
Figure 3b shows a perspective view of the coupling apparatus coupled to the track;
Figure 4 shows a cross sectional side view of a low-noise beam assembly comprising the coupling apparatus as assembled on a track;
Figure 5a, b, and c show a top view, side view and bottom view of a trigger bar, respectively;
Figure 6 shows a perspective view of the trigger bar;
Figure 7 shows a track along which an apparatus according to an embodiment of the invention may move along; and
Figure 8 shows a cross sectional side view of a low-noise beam assembly comprising the coupling apparatus as assembled on a track and the trigger bar in use.

### Detailed Description

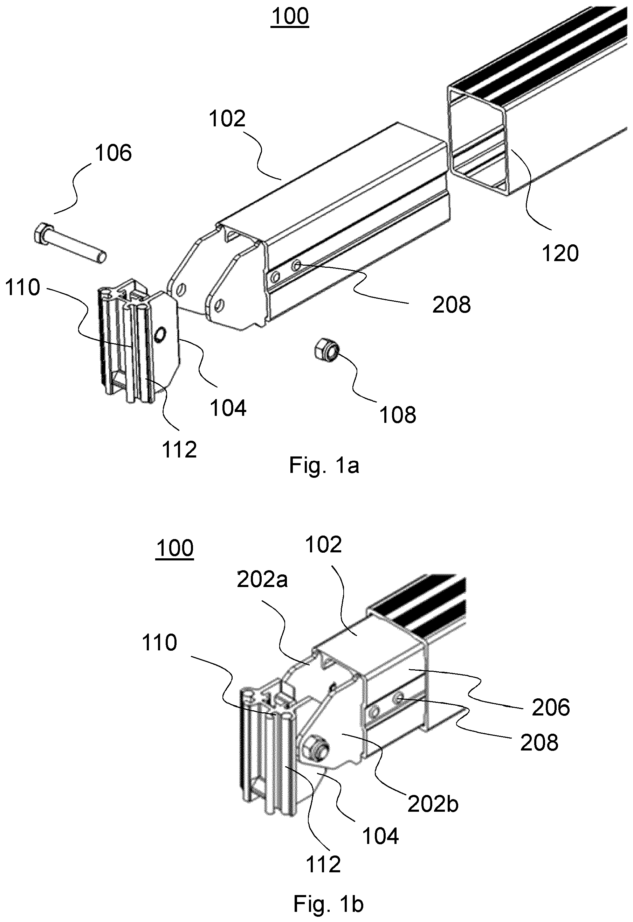

Figures 1a and 1b show an apparatus 100 according to an embodiment of the invention. The apparatus 100 is for coupling a beam 120, such as the decking beams described above, to a track along which the apparatus 100 can move. For example, the track may be located on an interior wall of a vehicle container oriented to run vertically on the wall and the apparatus 100 may be arranged to move vertically along the rail.

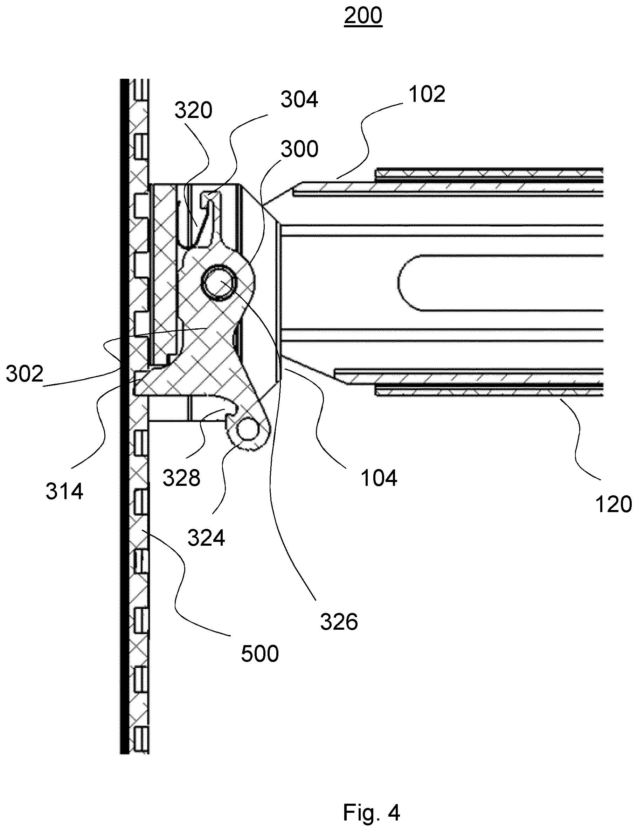

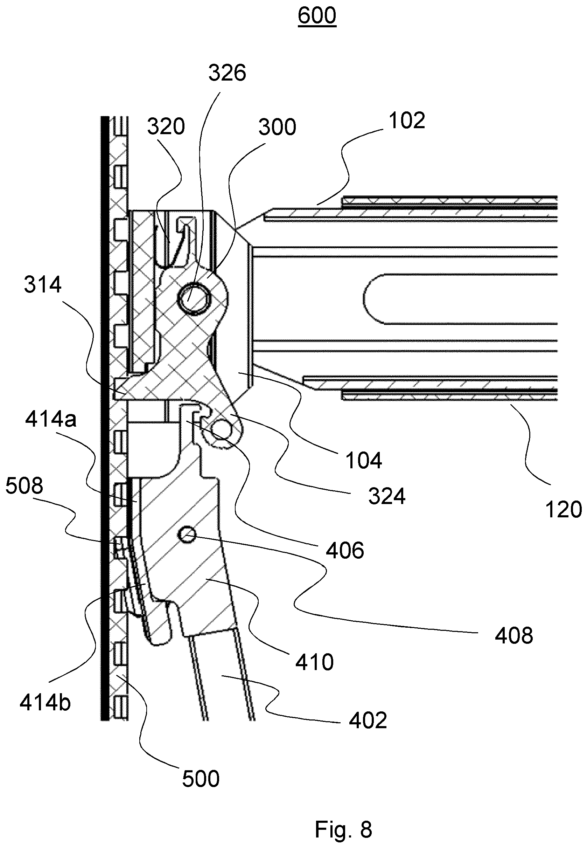

The apparatus 100 forms part of an assembly (described below with reference to Figure 4 and Figure 8) that may be installed into a vehicle to support goods being transported in the vehicle. For example, the vehicle may be a truck or lorry used to transport goods by road. In the example of a lorry, the storage compartment may be fixed to a rearward portion of the lorry's chassis or may be fixed to a trailer that may be connected to a tractor unit. In other examples, the storage compartment may be a container unit (of the type commonly used to transport goods by sea) that can be loaded onto the lorry or lorry trailer. The term container is used herein to refer to any of these possibilities.

The apparatus 100 comprises an arm assembly 102 and a head assembly 104. Figure 1b shows the coupling apparatus 100 of Figure 1a in an assembled form. In the present embodiment, the beam 120 has a rectangular cross section comprising four perpendicular side walls and a hollow centre. The beam 120 is configured to receive one end of the arm assembly 102 such that the arm assembly slides within the hollow centre of the beam 120.

The arm assembly 102 comprises a main body 206. In the present embodiment, the main body has four perpendicular side walls which define a hollow centre and a rectangular cross section. At the furthest most end of the arm assembly 102 away from the beam 120, there are two protruding side panels 202a, 202b. The side panels 202a, 202b are connected to the main body 206 with mechanical fasteners 208. In the example shown in Figures 1a and 1b, the side panels 202a, 202b are joined to the main body 206 with rivets 208. The rivets 208 may be any suitable diameter.

The head assembly 104 is joined to the arm assembly 102 by a bolt 106 and a nut 108. The side panels 202a, 202b, have holes configured to receive the bolt 106. The nut 108 and bolt 106 may have any suitable diameter and thread that correspond to the diameter of the hole.

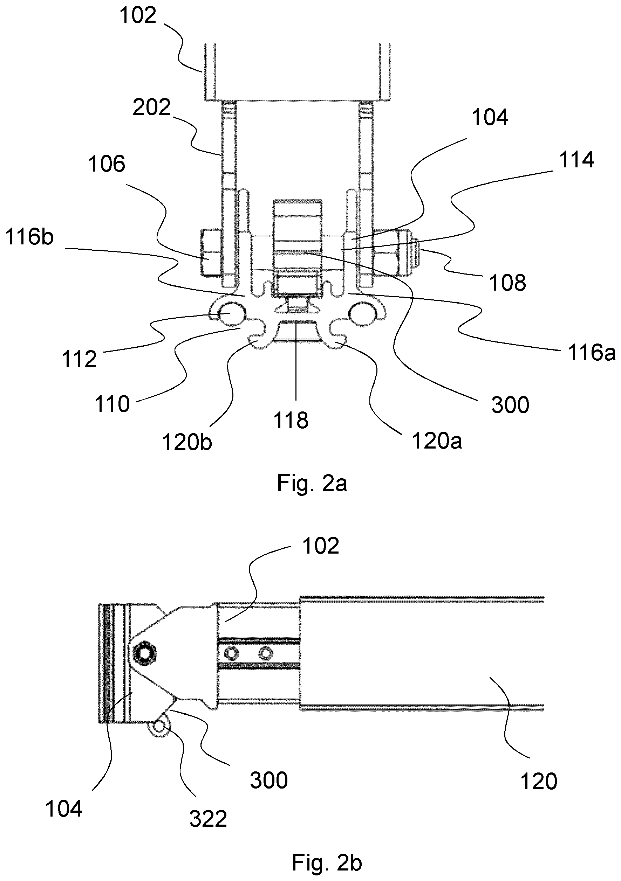

The head assembly 104 comprises a receiving portion 110 which is configured to receive a plastics material 112. In the present embodiment, the head assembly 104 has two receiving portions located on opposite sides of the head assembly. Each receiving portion has a circular cross section. The head assembly 104 will now be described in more detail with reference to Figure 2a.

Figure 2a shows a top down view of the head assembly 104. The head assembly 104 has a body portion 114. The body portion 114 comprises two parallel side walls 116a, 116b similar to the side panels 202a, 202b of the arm assembly 102. The side walls 116a, 116b have holes configured to receive the bolt 108 for fastening the head assembly 104 with the arm assembly 102 as described above.

The side walls 116a, 116b are joined together by a connecting wall 118 that is perpendicular to the side walls 116a, 116b, such that it defines a "U-shape" cavity for receiving a trigger mechanism 300 therebetween (the trigger mechanism is described in more detail below). At the corner between each side wall 116a, 116b and the connecting wall 118, there is a receiving cavity 110 on the external surface of the body portion 114 configured to receive a plastics material 112, and an engagement portion 120a, 120b. In the present embodiment, the receiving cavity 110 has a semicircular cross section configured to receive a plastics material with a circular cross section, such that a portion of the plastics material remains outside of the receiving cavity 110. In this particular embodiment, the plastics material is a cylindrical rod made of Acetyl material, but other plastic material may be used. In use, the engagement portion 120a, 120b acts as a bearing surface for contact with the track 500 (described in more detail below). In use, a portion of the plastics material is in contact with the surface of the track. This reduces the metal-on-metal contact between the head assembly 104 and the track 500. Advantageously, the coefficient of friction between the plastics material 112 and the metal track 500 is lower than that of metal-on-metal, which reduces the noise level when the apparatus 100 moves along the track 500.

Figure 2b shows a side view of the coupling apparatus when assembled, comprising the beam 120, the arm assembly 102, the head assembly 104 as described above. Figure 2b also shows a protruding trigger member 324 of the trigger mechanism 300 (not shown in this figure), which will be described in more detail with reference to Figure 4.

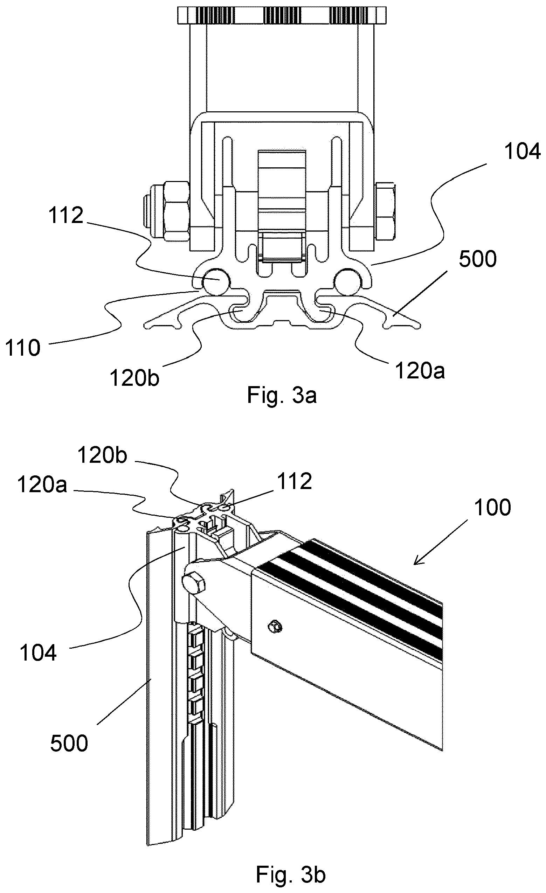

Figure 3a and 3b shows the apparatus 100 when coupled to the track 500. Figure 3a shows a top down view of the apparatus 100 coupled to the track 500. The engagement portion 120a, 120b acts as bearing surfaces for contact with the track 500. In the present embodiment, the engagement portions 120a, 120b are hooked-shaped such that each engagement portion 120a, 120b, is configured to couple with a groove on the surface of the track 500. A portion of the plastics material 112 is received by the receiving cavity 110. A portion of the plastics material 112 is in contact with the track 500, which reduces the metal-on-metal contact between the head assembly 104 and the track 500.

Figure 3b shows a perspective view of the apparatus 100 coupled to the track 500. In this embodiment, the engagement portions 120a, 120b are coupled to a groove on the surface of the track 500. The apparatus 100 may be held stationary at the position as shown in Figure 3b via the trigger mechanism 300. When the trigger mechanism 300 is actuated, the apparatus 100 may slide along the track 500. The trigger mechanism will be described in more detail below.

Figure 4 shows a cross sectional view of the side of an assembly 200 comprising the coupling apparatus 100 when assembled and connected to a track 500. The beam 120, arm assembly 102 and head assembly 104, of the present embodiment have been described above. The features of the trigger mechanism 300 will now be described in more detail. The trigger mechanism 300 is housed within the main body 114 of the head assembly 104. The side walls 116a, 116b and the connecting wall 118, define the housing. The vertical length of each side wall 116a, 116b i.e. along the direction of the track, is longer than the vertical length of the connecting wall 118, so that a gap is formed at the bottom of the connecting wall 118 for receiving a rear protruding portion 314 of the trigger mechanism 300. The rear protruding portion 314 engages with a receiver on the track 500.

The trigger mechanism 300 has a main body 302 and three protruding portions: an upper hook portion 304, a rear protruding portion 314, and a trigger actuator 324. The upper hook portion 304 is linked to a biasing member 320. The biasing member 320 is in the form of a tensioned wire or leaf spring. In other embodiments, other biasing members may be used such as a coiled spring. As mentioned above, the rear protruding portion 314 engages with receiver on the track 500. The trigger actuator 324 protrudes at the bottom of the head assembly 104 such that it is in view during normal use.

When the assembly is in use, the biasing member 320 urges the trigger mechanism 300 such that the rear protrusion 314 protrudes from the gap between the side walls 116a, 116b and the bottom of the connecting wall 118 to enable engagement with a corresponding receiver in the track 500. In this configuration, the trigger mechanism 300 rests against the connecting wall 118. When the trigger actuator 324 is pulled away from the wall of the container against the action of the biasing member 320, the rear protrusion 314 is retracted into the main body 114 of the head assembly 104 and out of engagement with the receiver in the track, allowing the head assembly 104 to be moved (e.g. slid) along the track.

Within the main body of the trigger mechanism 300 is a pivot aperture 326. In use, the trigger actuator 324 is used to manipulate the trigger 300 about an axis of the pivot aperture 326 to move the rear protrusion 314 into engagement with a corresponding receiver in the track 500 and out of engagement with a corresponding receiver in the track 500.

The trigger actuator 324 of this embodiment has a cylindrical shape with an aperture or hole extending into the page according to side view of Figure 4. The trigger actuator 324 has a flat flange portion 328 such that in use, when the trigger is to be actuated, it may be done by bringing a trigger beam in contact with the flange portion 328, as described in more detail below. The trigger may be actuated using a rod or hook through the aperture.

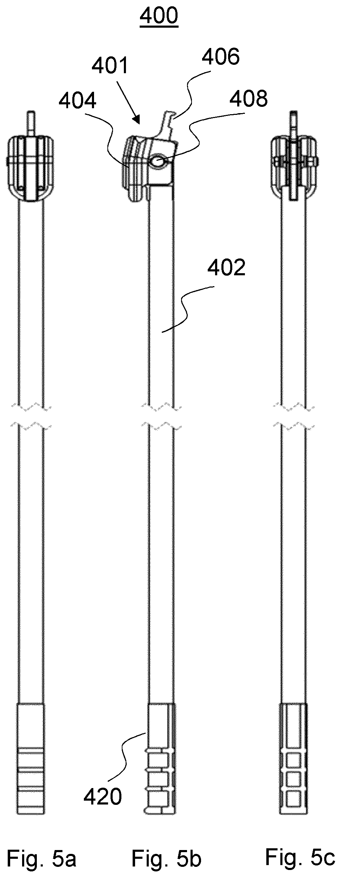

Figures 5a, 5b, and 5c show different perspective views of a trigger bar 400 according to a second aspect of the invention. Figures 5a, 5b, and 5c show a top view, a side view and a bottom view of a trigger bar, respectively. The trigger bar comprises an elongated arm 402, one end of the elongated arm 402 comprising a gripping portion 420 for holding in use, and an opposite end comprising a actuating assembly 401. The elongated arm 402 and actuating assembly 401 may be connected with a nut and bolt (not shown) which pass through a hole at a connecting point 408. It will be appreciated by the skilled person that a suitable nut and bolt could be used to fasten the actuating assembly 401 and elongated arm 402.

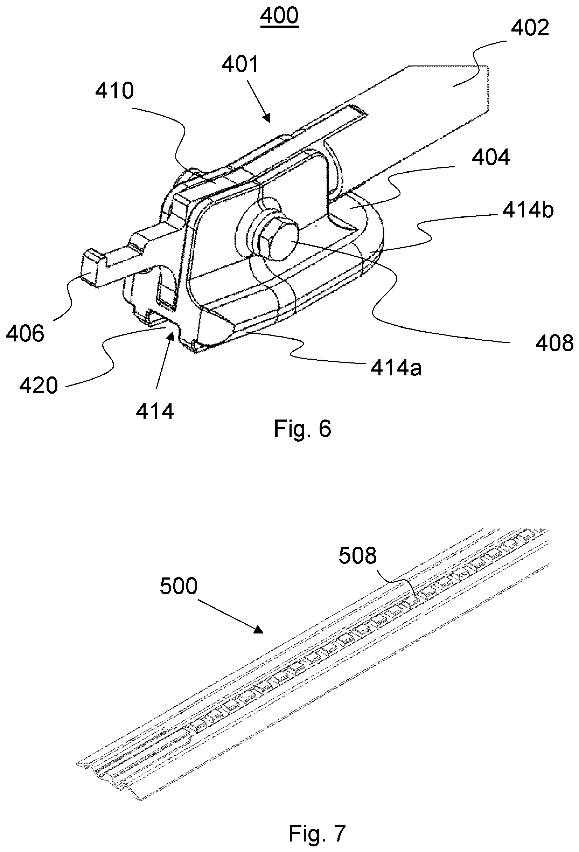

With reference to Figure 6, the actuating assembly 401 will be described in more detail. The actuating assembly 401 comprises a main body 410 and a protrusion 406 extending away from the main body 410 in an opposite direction to the elongated arm 402. The actuating assembly 401 and protrusion 406 are made of the same material such as metal, for example aluminium or stainless steel. The protrusion 406 extends outwards and has a perpendicular tab at its furthest end such that it forms an "L-shape". In use, the L-shaped end of the protrusion 406 acts as a hook to connect with the flange portion 328 of the trigger actuator 324 to engage or disengage the coupling apparatus 100 with/from the track 500, as shown in Figure 8 and described in more detail below.

The main body 410 is housed within a plastics material sleeve 404. The sleeve 404 has two side portions connected by a base such that the side portions and the base define a slot for the main body 410 to be housed. An aperture or hole is located on each side portion which corresponds with the hole at the connecting point 408 for receiving a nut and bolt for fastening the plastic sleeve 404, main body 410 and the elongated arm 402 together.

The external surface of the base of the sleeve 404 has a contact plate 414 comprising a first contact surface 414a and a second contact surface 414b. The first contact surface 414a and the second contact surface 414b are connected at a joint or turning point such that the first contact surface 414a is at an angle with respect to the second contact surface 414b. In use, the first contact surface 414a may come into contact with the track 500 in a first orientation. When the trigger bar is located at or near the coupling apparatus 100, movement of the elongated arm toward the track 500 causes the head assembly to rotate around the turning point from the first orientation to a second orientation. The second contact surface 414b is in contact with the track 500 in the second orientation. The contact plate 414 has an elongated channel 420 that runs along the same direction as the axis of the trigger bar and continues from the first contact surface 414a to the second contact surface 414b. The sides of the elongated channel 420 define a connecting rail for engaging with the track 500.

In this embodiment, the material of the sleeve is plastic. This is advantageous for reducing the noise levels when the trigger bar 400 is coupled to the track 500 and when the trigger bar moves along the track to adjust the height of the coupling apparatus, for example. The coefficient of friction between the plastics material and the metal track may be lower than metal-on-metal, and thus the former will be quieter than the latter. Additionally or alternatively, impacts between the plastics material and the track may be partially absorbed by the plastics material, thereby potentially reducing noise compared to metal on metal impacts.

Figure 7 shows an example of a track 500 that may be installed on an interior wall of a container. The track 500 may include fixing apertures or holes through which fixings (e.g. screws) may pass to fix the track 500 to the interior of the container. Receivers 508 spaced apart along the track 500 are provided to receive a protrusion 314 of the trigger mechanism 300 described above with reference to Figure 3, thereby preventing movement of the apparatus along the track 500.

Figure 8 shows a cross sectional side view of a decking beam assembly comprising the coupling apparatus 100 and trigger bar 400 as described above. In an embodiment, the contact plate 414 of the plastic sleeve 404 is connected to the track 500 such that it can move (e.g. slide) along the track 500. Within the head assembly 104 of the coupling apparatus 100, the trigger mechanism 300 is resting against the connecting wall 118 of the head assembly 104. When the trigger actuator 324 is pulled inwardly against the action of the biasing member 320 using the L-shaped protruding end 406 of the trigger bar, the rear protrusion 314 of the trigger mechanism is retracted into the main body 114 of the head assembly 104 and out of engagement with the receiver in the track 500, allowing the head assembly 104 to be moved (e.g. slid) along the track. The trigger bar 400 and coupling apparatus 100 may slide along the track together when adjusting the height of the beam 120. When the coupling apparatus is moved, a portion of the plastics material 112 (not shown in Figure 8) of the head assembly 104 remains in contact with the track 500. In this configuration, the noise level may be reduced due to the lower coefficient of friction between the plastics material and the metal track compared to the coefficient of friction between metal connected to metal.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In some embodiments, the coupling apparatus 100 may comprise an arm assembly 102 configured to receive a beam 120. In such an embodiment, the dimensions of the arm assembly 102 may be larger than the dimensions of the beam 120. The arm assembly 102 may slidably receive the beam 120 such that the beam is within the cavity defined by the side walls of the arm assembly.

In some embodiments, the plastics material 112 may be made of other material that provides a low coefficient of friction when in contact with a metal track, and/or absorbs impacts between the head assembly and the metal track. As described above, the head assembly 104 comprises two receiving portions 110, each configured to receive a plastics material. In some embodiments, there may be a single receiving portion 110 and a single plastics material 112. In other embodiments, there may be more than two receiving portions 110, each configured to receive a plastics material 112.

In some embodiments, the receiving portion 110 may be a groove. In other embodiments, the receiving portion 110 may be configured as a spheroid joint, for receiving a spherical shaped plastics material 112, for example in a ball-and-socket joint configuration. The cross sectional shape of the receiving portion 110 may be the same or similar to the cross sectional shape of the plastics material 112, and vice versa, so that the plastics material 112 fits snuggly within the receiving portion 110. In other embodiments, the receiving portion 110 may have a different cross sectional shape to the plastics material 112.

The plastics material 112 may be a rod. The plastics material may be a hollow rod. The plastics material may have a different shape, such as rectangular rod. In some embodiments, the plastics material may be a spherical ball, for example. The plastics material may be a hollow rod or plastic tube comprising a metal core. This may advantageously provide stability and structure to the profile of the plastic material.

The plastics material 112 may comprise of a combination of different materials. The plastics material 112 may comprise other material that has a low coefficient of friction such that when the plastics material is in contact with a metal track, the head assembly 104 can move (e.g. slide) along the track, and the noise created by the frictional contact is reduced. The portion of the plastics material that protrudes away from the receiving cavity 110 may be between 5% to 75% of the plastics material.

The sleeve 404 of the trigger head may comprise a combination of plastic materials that have a low coefficient of friction when coupled with a metal track. The external surface of the base of the sleeve 404 may be coupled to the track using a double-footed profile. The double-footed profile of the sleeve 404 assists the sleeve 404 to couple and move along with the track. The double-footed profile allows the user to align the trigger bar 400 with the coupling apparatus 100. The double-footed profile assists with coupling the trigger bar with the track for stability and guidance.

The track 500 may comprise a plastics material arranged on a surface of the track 500 such that the plastics material provides a contact surface between the coupling apparatus 100 and the metal track 500 when the coupling apparatus 100 is engaged with the track 500. The plastics material may be a rod of plastics material arranged to fit within a receiving portion or groove running along the length of the track 500. The plastics material may be a sheet of plastics material covering the surface of the track 500. For example, the sheet of plastics material may be moulded to fit around the receivers 508 and other indentations on the surface of the track 500.

The coupling assembly of Figure 8 may be used with a traditional trigger bar as known by the person skilled in the art, which comprises an elongated arm with a bent or doglegged portion at one end, which acts as a trigger head for actuating the trigger actuator 324 of the trigger mechanism 300.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. An apparatus (100) for coupling a beam (120) to a track (500) comprising:
an arm assembly (102) having a first end arranged to interface with the beam (120), and a second end opposite the first end,
a head assembly (104) coupled to the second end of the arm (102) and
arranged to engage with the track (500) to inhibit movement of the head assembly (104) along the track (500), wherein the head assembly (104) comprises a receiving portion (110) and a plastics material (112) received within the receiving portion (110), **characterised in that** the receiving portion (110) is a groove and the plastics material (112) is a rod having a circular cross-section, such that the plastics material (112) provides a contact surface between the head assembly (104) and the track (500) when the head assembly (104) is engaged with the track (500).

2. A coupling apparatus as claimed in claim 1 wherein the head assembly (104) comprises two receiving portions (110), each receiving portion configured to receive a plastics material (112).

3. A coupling apparatus according to any preceding claim, wherein the plastics material (112) remains in contact with the track (500) when the head assembly (104) moves along the track (500).

4. A low-noise decking beam assembly comprising:
- a track (500) for mounting on a wall of a container,
- a beam (120) having a first end and a second end,
- a coupling apparatus (100) for coupling a beam (120) to a track (500) in accordance with any preceding claim; and
- wherein the coupling apparatus (100) is arranged to interface the first and/or second end of the beam, and engage with the track (500).

5. A trigger bar (400) for manipulating a trigger mechanism of a low-noise decking beam assembly according to claim 4, the trigger bar comprising:
- an elongated arm (402) comprising a first end and a second end opposite the first end; and
- an actuating assembly (401) connected to the second end of the arm, the actuating assembly (401) comprising a main body (410) having a protrusion (406) arranged to engage with the trigger mechanism, the main body (410) further comprising a plastics material contact plate (414), the contact plate comprising a first contact surface (414a) at a first orientation, and a second contact surface (414b) at a second orientation, the first orientation being different to the second orientation.

6. A trigger bar (400) according to claim 5 wherein the first contact surface (414a) of the plastics material contact plate is configured to contact and move along a track (500) in the first orientation and the second contact surface (414b) of the plastics material contact plate is configured to contact and move along the track (500) in the second orientation.

7. A trigger bar (400) according to any of claims 5 to 6 wherein the second contact surface (414b) of the plastics material contact plate is configured to be brought into contact with the track (500) to actuate the trigger mechanism.

8. A trigger bar (400) according to any of claims 5 to 7 wherein the first contact surface and second contact surface meet at a turning point, wherein the trigger bar can move from the first orientation where the first contact surface is coupled to the track, to a second orientation where the second contact surface is coupled to the track.

## Patentansprüche

1. Vorrichtung (100) zum Koppeln eines Trägers (120) an eine Schiene (500) mit:
einer Armbaugruppe (102) mit einem ersten Ende, das so angeordnet ist, dass es an den Träger (120) anschließt, und einem zweiten Ende gegenüber dem ersten Ende,
einer Kopfbaugruppe (104), die an das zweite Ende des Arms (102) gekoppelt ist und so eingerichtet ist, dass sie mit der Schiene (500) ineinandergreift, so dass eine Bewegung der Kopfbaugruppe (104) entlang der Schiene (500) verhindert wird, bei der die Kopfbaugruppe (104) einen Aufnahmeabschnitt (110) und ein Plastikmaterial (112), das innerhalb des Aufnahmeabschnitts (110) aufgenommen ist, aufweist, **dadurch gekennzeichnet, dass** der Aufnahmeabschnitt (110) eine Nut ist und das Plastikmaterial (112) ein Stab mit einem kreisförmigen Querschnitt ist, so dass das Plastikmaterial (112) eine Kontaktfläche zwischen der Kopfbaugruppe (104) und der Schiene (500) vorsieht, wenn die Kopfbaugruppe (104) mit der Schiene (500) ineinandergreift.

2. Kopplungsvorrichtung, wie in Anspruch 1 beansprucht, bei der die Kopfbaugruppe (104) zwei Aufnahmeabschnitte (110) aufweist, die jeweils dazu ausgebildet sind, ein Plastikmaterial (112) aufzunehmen.

3. Kopplungsvorrichtung nach einem vorhergehenden Anspruch, bei der das Plastikmaterial (112) mit der Schiene (500) in Kontakt bleibt, wenn sich die Kopfbaugruppe (104) entlang der Schiene (500) bewegt.

4. Geräuscharme Deckträgerbaugruppe mit:
- einer Schiene (500) zur Montage an einer Wand eines Containers,
- einem Träger (120) mit einem ersten Ende und einem zweiten Ende,
- einer Kopplungsvorrichtung (100) zum Koppeln eines Trägers (120) an eine Schiene (500) gemäß einem vorhergehenden Anspruch; und
- bei der die Kopplungsvorrichtung (100) so angeordnet ist, dass sie an das erste und/oder zweite Ende des Trägers anschließt und mit der Schiene (500) ineinandergreift.

5. Auslösestange (400) zum Manipulieren eines Auslösemechanismus einer geräuscharmen Deckträgerbaugruppe nach Anspruch 4, mit:
- einem verlängerten Arm (402) mit einem ersten Ende und einem zweiten Ende gegenüber dem ersten Ende; und
- einer Betätigungsbaugruppe (401), die mit dem zweiten Ende des Arms verbunden ist und die einen Hauptkörper (410) mit einem Vorsprung (406), der so angeordnet ist, dass er mit dem Auslösemechanismus ineinandergreift, aufweist, welcher Hauptkörper (410) ferner eine Plastikmaterialkontaktplatte (414) aufweist, die eine erste Kontaktfläche (414a) an einer ersten Orientierung und eine zweite Kontaktfläche (414b) an einer zweiten Orientierung aufweist, welche erste Orientierung von der zweiten Orientierung verschieden ist.

6. Auslösestange (400) nach Anspruch 5, bei der die erste Kontaktfläche (414a) der Plastikmaterialkontaktplatte dazu ausgebildet ist, in der ersten Orientierung eine Schiene (500) zu kontaktieren und sich entlang der Schiene (500) zu bewegen, und die zweite Kontaktfläche (414b) der Plastikmaterialkontaktplatte dazu ausgebildet ist, in der zweiten Orientierung die Schiene (500) zu kontaktieren und sich entlang der Schiene (500) zu bewegen.

7. Auslösestange (400) nach einem der Ansprüche 5 bis 6, bei der die zweite Kontaktfläche (414b) der Plastikmaterialkontaktplatte dazu ausgebildet ist, mit der Schiene (500) zum Betätigen des Auslösemechanismus in Kontakt gebracht zu werden.

8. Auslösestange (400) nach einem der Ansprüche 5 bis 7, bei der sich die erste Kontaktfläche und die zweite Kontaktfläche an einem Drehpunkt treffen, bei der sich die Auslösestange von der ersten Orientierung, in der die erste Kontaktfläche an die Schiene gekoppelt ist, zu einer zweiten Orientierung, in der die zweite Kontaktfläche an die Schiene gekoppelt ist, bewegen kann.

## Revendications

1. Appareil (100) pour coupler une poutre (120) à une piste (500) comprenant :
un ensemble de bras (102) présentant une première extrémité agencée pour interfacer avec la poutre (120), et une seconde extrémité opposée à la première extrémité,
un ensemble de tête (104) couplé à la seconde extrémité du bras (102) et agencé pour venir en prise avec la piste (500) afin d'empêcher un déplacement de l'ensemble de tête (104) le long de la piste (500), dans lequel l'ensemble de tête (104) comprend une partie de réception (110) et une matière plastique (112) reçue dans la partie de réception (110), **caractérisé en ce que** la partie de réception (110) est une rainure et la matière plastique (112) est une tige présentant une section transversale circulaire, de telle sorte que la matière plastique (112) fournit une surface de contact entre l'ensemble de tête (104) et la piste (500) lorsque l'ensemble de tête (104) est mis en prise avec la piste (500).

2. Appareil de couplage selon la revendication 1, dans lequel l'ensemble de tête (104) comprend deux parties de réception (110), chaque partie de réception étant configurée pour recevoir une matière plastique (112).

3. Appareil de couplage selon l'une quelconque des revendications précédentes, dans lequel la matière plastique (112) reste en contact avec la piste (500) lorsque l'ensemble de tête (104) se déplace le long de la piste (500).

4. Ensemble de poutre de tablier à faible bruit, comprenant :
- une piste (500) à monter sur une paroi d'un conteneur,
- une poutre (120) présentant une première extrémité et une seconde extrémité,
- un appareil de couplage (100) pour coupler une poutre (120) à une piste (500) selon l'une quelconque des revendications précédentes ; et
- dans lequel l'appareil de couplage (100) est agencé pour interfacer la première et/ou la seconde extrémité de la poutre, et venir en prise avec la piste (500).

5. Barre de déclenchement (400) pour manipuler un mécanisme de déclenchement d'un ensemble de poutre de tablier à faible bruit selon la revendication 4, la barre de déclenchement comprenant :
- un bras allongé (402) comprenant une première extrémité et une seconde extrémité opposée à la première extrémité ; et
- un ensemble d'actionnement (401) connecté à la seconde extrémité du bras, l'ensemble d'actionnement (401) comprenant un corps principal (410) présentant une saillie (406) agencée pour venir en prise avec le mécanisme de déclenchement, le corps principal (410) comprenant en outre une plaque de contact en matière plastique (414), la plaque de contact comprenant une première surface de contact (414a) à une première orientation, et une seconde surface de contact (414b) à une seconde orientation, la première orientation étant différente de la seconde orientation.

6. Barre de déclenchement (400) selon la revendication 5, dans laquelle la première surface de contact (414a) de la plaque de contact en matière plastique est configurée pour venir en contact avec et se déplacer le long d'une piste (500) dans la première orientation, et la seconde surface de contact (414b) de la plaque de contact en matière plastique est configurée pour venir en contact avec et se déplacer le long de la piste (500) dans la seconde orientation.

7. Barre de déclenchement (400) selon l'une quelconque des revendications 5 à 6, dans laquelle la seconde surface de contact (414b) de la plaque de contact en matière plastique est configurée pour être amenée en contact avec la piste (500) afin d'actionner le mécanisme de déclenchement.

8. Barre de déclenchement (400) selon l'une quelconque des revendications 5 à 7, dans laquelle la première surface de contact et la seconde surface de contact se rencontrent à un point de changement de direction, dans laquelle la barre de déclenchement peut se déplacer de la première orientation dans laquelle la première surface de contact est couplée à la piste à une seconde orientation dans laquelle la seconde surface de contact est couplée à la piste.
